# EUROPEAN PATENT APPLICATION

(11) **EP 4 575 785 A1**
(43) Date of publication of application: **25.06.2025**
(21) Application number: 24165592.7
(22) Date of filing: 22.03.2024
(51) Int. Cl.: G06F 9/50

(54) **PROACTIVE LOAD BALANCING OF NETWORK TRAFFIC PROCESSING FOR WORKLOADS**

(30) Priority: 22.12.2023 US 202318394526
(71) Applicant: Juniper Networks, Inc., Sunnyvale, CA 94089 (US)
(72) Inventor: K N, Kiran, Sunnyvale, 94089 (US); SIKAND, Vrishabha, Sunnyvale, 94089 (US); GADIRAJU, Krishna Karthik, Sunnyvale, 94089 (US); MUNUKUTLA, Venkata Naga Chaitanya, Sunnyvale, 94089 (US)
(74) Representative: D Young & Co LLP

(57) **Abstract**

Proactive load balancing of network traffic processing for workloads. In general, techniques are described for a computing system comprising processing circuitry having access to a storage device. The processing circuitry is configured to apply, by a reinforcement learning agent, a policy model to a forecasted network traffic load associated with a workload to assign the workload to a first processing core of a plurality of processing cores of a computing device. The processing circuitry is also configured to process, by a virtual router and based on the assignment of the workload to the first processing core, network traffic for the workload using the first processing core.

## Description

### RELATED APPLICATION

This application claims the benefit of U.S. Application No. 18/394,526, filed December 22, 2023, the entire content of which is incorporated herein by reference.

### TECHNICAL FIELD

The disclosure relates to a virtualized computing infrastructure and, more specifically, to load balancing network traffic processing by a virtual router.

### BACKGROUND

Virtualized data centers are becoming a core foundation of the modem information technology (IT) infrastructure. In particular, modern data centers have extensively utilized virtualized environments in which workloads, such as virtual machines or containers, are deployed and executed on an underlying compute platform of physical computing devices. A virtual router creates virtual overlay networks ("virtual networks") on top of a physical underlay network and processes and forwards data traffic between workloads using the virtual networks.

### SUMMARY

In general, techniques are described for proactively load balancing among processing cores that a virtual router of a computing device uses to process network traffic associated with different workloads executing on the computing device. The virtual router is responsible for processing network traffic sourced by and destined to the workloads; such processing can include routing and forwarding, encapsulation and decapsulation for overlay tunnel network traffic, and other network traffic processing. As described herein, the virtual router assigns (or is instructed to assign) the task of network traffic processing for a given workload to a particular processing core of the computing device based on a policy model trained using reinforcement learning. The reinforcement learning algorithm can update the policy model in part based on a forecasted traffic load for a workload, along with other attributes that influence the overall state of the computing device.

The virtual router processes the network traffic for the workload using the assigned processing core. In some examples, the virtual router may rebalance assignments due to new (or deleted) workloads, changes in amounts of network processing required for respective workloads, or other factor(s).

The techniques may provide one or more technical advantages that realize one or more practical applications. For example, by assigning network traffic processing for workloads according to a policy model trained with reinforcement learning, the virtual router can more efficiently load balance workloads' traffic processing among the processing cores of the computing device compared to a static, round-robin assignment scheme. Proactive re-balancing of the assignments may reduce processing core starvation (network processing load too low) or overloading (network processing load too high), improve overall utilization, and/or reduce network processing bottlenecks and attendant latencies that may occur due oversubscribing a processing core. Rather than determining assignments of workloads to processing cores based only on real-time metrics, the techniques described herein update a policy model by applying reinforcement learning that can be based on forecasted traffic loads for workloads and requires a minimal amount of data versus traditional supervised/unsupervised machine learning. In this way, the techniques described herein assign workloads to processing cores of the virtual router in a more effective manner, while consuming less computational resources (e.g., memory, processing used for constant metric monitoring, etc.).

In one example, a computing system comprises processing circuitry having access to a storage device. The processing circuitry is configured to apply, by a reinforcement learning agent, a policy model to a forecasted network traffic load associated with a workload to assign the workload to a first processing core of a plurality of processing cores of a computing device. The processing circuitry is also configured to process, by a virtual router and based on the assignment of the workload to the first processing core, network traffic for the workload using the first processing core.

In one example, a method comprises applying, by a reinforcement learning agent, a policy model to a forecasted network traffic load associated with a workload to assign the workload to a first processing core of a plurality of processing cores of a computing device. The method further comprises processing, by a virtual router and based on the assignment of the workload to the first processing core, network traffic for the workload using the first processing core.

In another example, computer-readable storage media comprising instructions that, when executed, causes processing circuitry to apply, by a reinforcement learning agent, a policy model to a forecasted network traffic load associated with a workload to assign the workload to a first processing core of a plurality of processing cores of a computing device. The instructions further cause the processing circuitry to process, by a virtual router and based on the assignment of the workload to the first processing core, network traffic for the workload using the first processing core.

The details of one or more examples of this disclosure are set forth in the accompanying drawings and the description below. Other features, objects, and advantages will be apparent from the description and drawings, and from the claims.

### BRIEF DESCRIPTION OF DRAWINGS

FIG. 1 is a block diagram illustrating an example computing infrastructure in which examples of the techniques described herein may be implemented.
FIG. 2 is a block diagram illustrating an example computing device in which examples of the techniques described herein may be implemented.
FIG. 3 is a block diagram illustrating example components of an example computing device that executes a virtual router for virtual networks according to techniques described herein.
FIG. 4 is a conceptual diagram illustrating an example operation of updating a policy model for generating predicted assignments, in accordance with techniques described herein.
FIG. 5 is a block diagram illustrating example components of an example computing device that executes workloads and a virtual router for virtual networks according to techniques described herein.
FIG. 6 is a conceptual diagram illustrating example data for generating predicted assignments, in accordance with techniques described herein.
FIG. 7 is a flowchart illustrating an example operation of a method in accordance with techniques described herein.

Like reference characters denote like elements throughout the description and figures.

### DETAILED DESCRIPTION

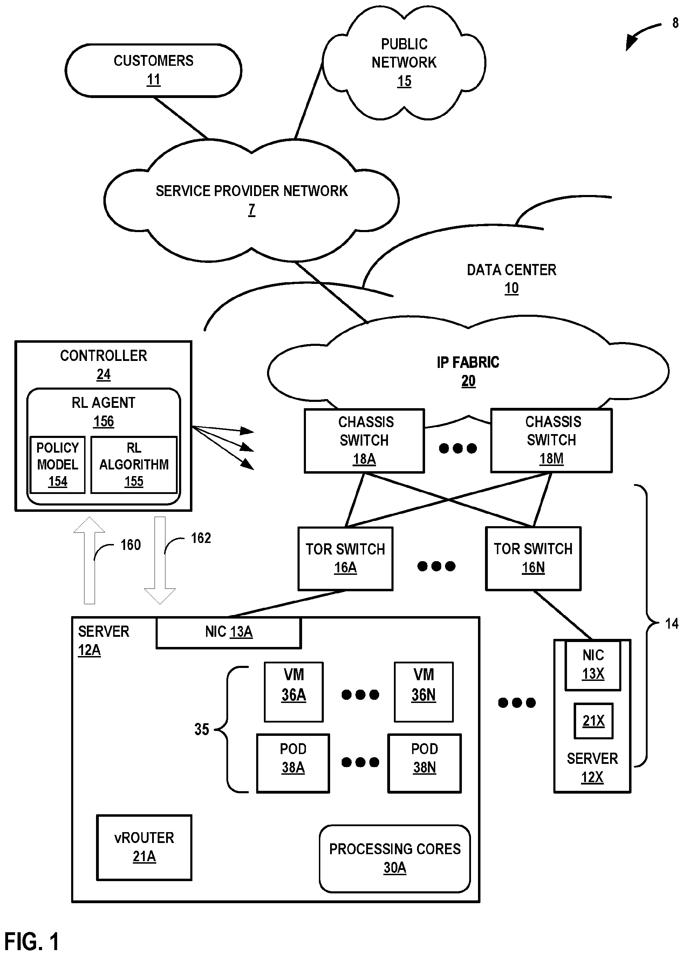

Particular aspects are set out in the appended independent claims. Various optional embodiments are set out in the dependent claims. FIG. 1 is a block diagram illustrating an example computing infrastructure 8 in which examples of the techniques described herein may be implemented. In general, data center 10 provides an operating environment for applications and services for customer sites 11 (illustrated as "customers 11") having one or more customer networks coupled to the data center by service provider network 7. Data center 10 may, for example, host infrastructure equipment, such as networking and storage systems, redundant power supplies, and environmental controls. Service provider network 7 is coupled to public network 15, which may represent one or more networks administered by other providers, and may thus form part of a large-scale public network infrastructure, e.g., the Internet. Public network 15 may represent, for instance, a local area network (LAN), a wide area network (WAN), the Internet, a virtual LAN (VLAN), an enterprise LAN, a layer 3 virtual private network (VPN), an Internet Protocol (IP) intranet operated by the service provider that operates service provider network 7, an enterprise IP network, or some combination thereof.

Although customer sites 11 and public network 15 are illustrated and described primarily as edge networks of service provider network 7, in some examples, one or more customer sites 11 and public network 15 may be tenant networks within data center 10 or another data center. For example, data center 10 may host multiple tenants (customers) each associated with one or more virtual private networks (VPNs), each of which may implement one of customer sites 11.

Service provider network 7 offers packet-based connectivity to attached customer sites 11, data center 10, and public network 15. Service provider network 7 may represent a network that is owned and operated by a service provider to interconnect a plurality of networks. Service provider network 7 may implement Multi-Protocol Label Switching (MPLS) forwarding and in such instances may be referred to as an MPLS network or MPLS backbone. In some instances, service provider network 7 represents a plurality of interconnected autonomous systems, such as the Internet, that offers services from one or more service providers.

In some examples, data center 10 may represent one of many geographically distributed network data centers. As illustrated in the example of FIG. 1, data center 10 may be a facility that provides network services for customers. A customer of the service provider may be a collective entity such as enterprises and governments or individuals. For example, a network data center may host web services for several enterprises and end users. Other example services may include data storage, virtual private networks, traffic engineering, file service, data mining, scientific- or super- computing, and so on. Although illustrated as a separate edge network of service provider network 7, elements of data center 10 such as one or more physical network functions (PNFs) or virtualized network functions (VNFs) may be included within the service provider network 7 core.

In this example, data center 10 includes storage and/or compute servers (or "nodes") interconnected via switch fabric 14 provided by one or more tiers of physical network switches and routers, with servers 12A-12X (herein, "servers 12") depicted as coupled to top-of-rack (TOR) switches 16A-16N. Servers 12 are computing devices and may also be referred to herein as "hosts" or "host devices" in that servers 12 host workloads 35 for execution by servers 12. Although only server 12A coupled to TOR switch 16A is shown in detail in FIG. 1, data center 10 may include many additional servers coupled to other TOR switches 16 of the data center 10.

Switch fabric 14 in the illustrated example includes interconnected top-of-rack (TOR) (or other "leaf') switches 16A-16N (collectively, "TOR switches 16") coupled to a distribution layer of chassis (or "spine" or "core") switches 18A-18M (collectively, "chassis switches 18"). Although not shown, data center 10 may also include, for example, one or more non-edge switches, routers, hubs, gateways, security devices such as firewalls, intrusion detection, and/or intrusion prevention devices, servers, computer terminals, laptops, printers, databases, wireless mobile devices such as cellular phones or personal digital assistants, wireless access points, bridges, cable modems, application accelerators, or other network devices. Data center 10 may also include one or more physical network functions (PNFs) such as physical firewalls, load balancers, routers, route reflectors, broadband network gateways (BNGs), mobile core network elements, and other PNFs.

In this example, TOR switches 16 and chassis switches 18 provides servers 12 with redundant (multi-homed) connectivity to IP fabric 20 and service provider network 7. Chassis switches 18 aggregate traffic flows and provides connectivity between TOR switches 16. TOR switches 16 may be network devices that provide layer 2 (MAC) and/or layer 3 (e.g., IP) routing and/or switching functionality. TOR switches 16 and chassis switches 18 may each include one or more processors and a memory and can execute one or more software processes. Chassis switches 18 are coupled to IP fabric 20, which may perform layer 3 routing to route network traffic between data center 10 and customer sites 11 by service provider network 7. The switching architecture of data center 10 is merely an example. Other switching architectures may have more or fewer switching layers, for instance. IP fabric 20 may include one or more gateway routers.

The term "packet flow," "traffic flow," or simply "flow" refers to a set of packets originating from a particular source device or endpoint and sent to a particular destination device or endpoint. A single flow of packets may be identified by the 5-tuple: <source network address, destination network address, source port, destination port, protocol>, for example. This 5-tuple generally identifies a packet flow to which a received packet corresponds. An n-tuple refers to any n items drawn from the 5-tuple. For example, a 2-tuple for a packet may refer to the combination of <source network address, destination network address> or <source network address, source port> for the packet.

Servers 12 may each represent a compute server or storage server. For example, each of servers 12 may represent a computing device, such as an x86 processor-based server, configured to operate according to techniques described herein. Servers 12 may provide Network Function Virtualization Infrastructure (NFVI) for an NFV architecture.

Servers 12 may include one or more processing cores. Server 12A includes processing cores 30A, server 12X includes processing cores 30X (not shown), and so forth. Each core of processing cores 30A is an independent execution unit ("core") to perform instructions that conform to an instruction set architecture, the instructions stored to storage media. Execution units may be implemented as separate integrated circuits (ICs) or may be combined within one or more multi-core processors (or "many-core" processors) that may be each implemented using a single IC (i.e., a chip multiprocessor).

Any server of servers 12 may be configured with workloads 35 by virtualizing resources of the server to provide an isolation among one or more processes (applications) executing on the server. "Hypervisor-based" or "hardware-level" or "platform" virtualization refers to the creation of virtual machines that each includes a guest operating system for executing one or more processes. In general, a virtual machine provides a virtualized/guest operating system for executing applications in an isolated virtual environment. Because a virtual machine is virtualized from physical hardware of the host server, executing applications are isolated from both the hardware of the host and other virtual machines. Each virtual machine may be configured with one or more virtual network interfaces for communicating on corresponding virtual networks.

Virtual networks are logical constructs implemented on top of the physical networks. Virtual networks may be used to replace VLAN-based isolation and provide multi-tenancy in a virtualized data center, e.g., data center 10. Each tenant or an application can have one or more virtual networks. Each virtual network may be isolated from all the other virtual networks unless explicitly allowed by security policy.

Virtual networks can be connected to and extended across physical Multi-Protocol Label Switching (MPLS) Layer 3 Virtual Private Networks (L3VPNs) and Ethernet Virtual Private Networks (EVPNs) networks using a datacenter 10 gateway router (not shown in FIG. 1). Virtual networks may also be used to implement Network Function Virtualization (NFV) and service chaining.

Virtual networks can be implemented using a variety of mechanisms. For example, each virtual network could be implemented as a Virtual Local Area Network (VLAN), Virtual Private Network (VPN), etc. A virtual network can also be implemented using two networks - the physical underlay network made up of IP fabric 20 and switching fabric 14 and a virtual overlay network. The role of the physical underlay network is to provide an "IP fabric," which provides unicast IP connectivity from any physical device (server, storage device, router, or switch) to any other physical device. The underlay network may provide uniform low-latency, non-blocking, high-bandwidth connectivity from any point in the network to any other point in the network.

Virtual routers running in servers 12 (e.g., vRouters 21) create a virtual overlay network on top of the physical underlay network using a mesh of dynamic "tunnels" amongst themselves. These overlay tunnels can be MPLS over GRE/UDP tunnels, or VXLAN tunnels, or NVGRE tunnels, for instance. The underlay physical routers and switches may not store any per-tenant state for virtual machines or other workloads, such as any Media Access Control (MAC) addresses, IP address, or policies. The forwarding tables of the underlay physical routers and switches may, for example, only contain the IP prefixes or MAC addresses of the physical servers 12. Gateway routers or switches that connect a virtual network to a physical network are an exception and may contain tenant MAC or IP addresses.

Virtual routers 21 of servers 12 often contain per-tenant state. For example, they may contain a separate forwarding table (a routing-instance) per virtual network. The forwarding table contains the IP prefixes (in the case of layer 3 overlays) or the MAC addresses (in the case of layer 2 overlays) of the virtual machines or other workloads (e.g., pods of containers). No single virtual router 21 needs to contain all IP prefixes or all MAC addresses for all virtual machines in the entire data center. A given virtual router 21 only needs to contain those routing instances that are locally present on the server 12 (i.e., which have at least one workload present on the server 12).

Servers 12 host virtual network endpoints for one or more virtual networks that operate over the physical network represented here by IP fabric 20 and switch fabric 14. Although described primarily with respect to a data center-based switching network, other physical networks, such as service provider network 7, may underlay the one or more virtual networks.

Each of servers 12 may host one or more workloads 35 each having at least one virtual network endpoint for one or more virtual networks configured in the physical network. A virtual network endpoint for a virtual network may represent one or more workloads that share a virtual network interface for the virtual network. For example, a virtual network endpoint may be a virtual machine, a set of one or more containers (deployed using a pod for instance), or another other workload(s), such as a layer 3 endpoint for a virtual network. The term "workload" encompasses virtual machines, containers, and other virtualized computing resources, as well as native processes that provide an at least partially independent execution environment for applications. The term "workload" may also encompass a pod of one or more containers. As shown in FIG. 1, server 12A hosts one or more virtual network endpoints that are workloads 35, in the form of pods 38A-38N (collectively, "pods 38") and VMs 36A-36N (collectively, "VMs 36"). Pods 38 may be Kubernetes Pods or another container deployment structure. Server 12 may host only Pods, only VMs, different numbers of Pods and VMs, and/or may host other types of workloads.

Server 12A may execute as many workloads 35 as is practical given hardware resource limitations of server 12A. Each of the virtual network endpoints may use one or more virtual network interfaces to perform packet I/O or otherwise process a packet. For example, a virtual network endpoint may use one virtual hardware component (e.g., an SR-IOV virtual function) enabled by NIC 13A to perform packet I/O and receive/send packets on one or more communication links with TOR switches 16A. Other examples of virtual network interfaces are described below.

Servers 12 each includes at least one network interface card (NIC) 13, which each includes at least one interface to exchange packets with TOR switches 16 over a communication link. For example, server 12A includes NIC 13A. Any of NICs 13 may provide one or more virtual hardware components 21 for virtualized input/output (I/O). A virtual hardware component for I/O may be a virtualization of the physical NIC (the "physical function"). For example, in Single Root I/O Virtualization (SR-IOV), which is described in the Peripheral Component Interface Special Interest Group SR-IOV specification, the PCIe Physical Function of the network interface card (or "network adapter") is virtualized to present one or more virtual network interfaces as "virtual functions" for use by respective endpoints executing on the server 12. In this way, the virtual network endpoints may share the same PCIe physical hardware resources and the virtual functions are examples of virtual hardware components 21. As another example, one or more servers 12 may implement Virtio, a para-virtualization framework available, e.g., for the Linux Operating System, that provides emulated NIC functionality as a type of virtual hardware component to provide virtual network interfaces to virtual network endpoints. As another example, one or more servers 12 may implement Open vSwitch to perform distributed virtual multilayer switching between one or more virtual NICs (vNICs) for hosted virtual machines, where such vNICs may also represent a type of virtual hardware component that provide virtual network interfaces to virtual network endpoints. In some instances, the virtual hardware components are virtual I/O (e.g., NIC) components. In some instances, the virtual hardware components are SR-IOV virtual functions. In some examples, any server of servers 12 may implement a Linux bridge that emulates a hardware bridge and forwards packets among virtual network interfaces of the server or between a virtual network interface of the server and a physical network interface of the server. For Docker implementations of containers hosted by a server, a Linux bridge or other operating system bridge, executing on the server, that switches packets among container may be referred to as a "Docker bridge." The term "virtual router" as used herein may encompass a Contrail or Tungsten Fabric virtual router, Open vSwitch (OVS), an OVS bridge, a Linux bridge, Docker bridge, or other device and/or software that is located on a host device and performs switching, bridging, or routing packets among virtual network endpoints of one or more virtual networks, where the virtual network endpoints are hosted by one or more of servers 12.

Servers 12 each include one or more processing cores. Workloads 35 of server 12A are executed by processing cores 30A according to an assignment, often referred to as "pinning" in that the underlying process for a given workload 35 is "pinned" to a particular core of processing cores 30A, which executes the software instructions for the workload. For example, VM 36A may be pinned to a first core of processing cores 30A, which executes VM 36A and any applications therein. Pod 38N may be pinned to a second core of processing cores 30A, which executes Pod 38N and any containerized applications therein. In this disclosure, the processing core assigned to execute a workload can be different than the processing core assigned to process, with a virtual router, network traffic for the workload.

One or more of servers 12 may each include an individual virtual router 21 ("vRouter 21") that executes one or more routing instances for corresponding virtual networks within data center 10 to provide virtual network interfaces and route packets among the virtual network endpoints. Each of the routing instances may be associated with a network forwarding table. Each of the routing instances may represent a virtual routing and forwarding instance (VRF) for an Internet Protocol-Virtual Private Network (IP-VPN). Packets received by the virtual router 21A of server 12A, for instance, from the underlying physical network fabric of data center 10 (i.e., IP fabric 20 and switch fabric 14) may include an outer header to allow the physical network fabric to tunnel the payload or "inner packet" to a physical network address for a network interface card 13A of server 12A that executes the virtual router. The outer header may include not only the physical network address of the network interface card 13A of server 12A, but also a virtual network identifier such as a VxLAN tag or Multiprotocol Label Switching (MPLS) label that identifies one of the virtual networks as well as the corresponding routing instance executed by the virtual router 21A. An inner packet includes an inner header having a destination network address that conforms to the virtual network addressing space for the virtual network identified by the virtual network identifier.

Virtual routers 21 terminate virtual network overlay tunnels and determine virtual networks for received packets based on tunnel encapsulation headers for the packets, and forwards packets to the appropriate destination virtual network endpoints for the packets. For server 12A, for example, for each of the packets outbound from virtual network endpoints hosted by server 12A (e.g., VM 36A or pod 38A), the virtual router 21A attaches a tunnel encapsulation header indicating the virtual network for the packet to generate an encapsulated or "tunnel" packet, and virtual router 21A outputs the encapsulated packet via overlay tunnels for the virtual networks to a physical destination computing device, such as another one of servers 12. As used herein, a virtual router 21 may execute the operations of a tunnel endpoint to encapsulate inner packets sourced by virtual network endpoints to generate tunnel packets and decapsulate tunnel packets to obtain inner packets for routing to other virtual network endpoints.

Each of servers 12 provides an operating environment for execution of one or more application workloads 35. As described herein, the terms "application workloads" or "workloads" may be used interchangeably to refer to application workloads. Workloads 35 may be deployed using a virtualized environment, such as virtual machines 36A-36N (collectively, "virtual machines 36"), pods 38A-38N (collectively, "pods 38"), or other types of virtualized computing instances, or in some cases on a bare metal server that executes the workloads 35 directly rather than indirectly in a virtualized environment. Some or all of the servers 12 can be bare metal servers (BMS). A BMS can be a physical server that is dedicated to a specific customer or tenant.

Each of workloads 35 is executed by one of processing cores 30A. That is, processing cores 30A executes respective software instructions for the workloads 35, and workloads 35 send and receive traffic using virtual networks managed in part by controller 24 and virtual routers 21.

Processing cores 30A also execute virtual router 21A. Virtual router 21A uses processing cores 30A to service the networking requirements of each workload, such as to process (e.g., by routing, forwarding, or applying services to) network traffic sent by the workload or destined for the workload and therefore associated with the workload. Different workloads 35 may be associated with different amounts of network traffic, which can also change over time for each workload.

Virtual router 21A may load balance among processing cores 30A that virtual router 21A uses to process network traffic associated with different workloads 35. Virtual routers 21 may use one or more of processing cores 30A to service network capabilities of workloads by processing network traffic associated with workloads. Virtual routers conventionally assign the processing cores to process network traffic for different workloads in a round-robin manner, and the assigned processing core continues processing the network traffic for the workload until the workload is deleted. In other words, virtual routers statically assign a core of processing cores 30A to handle network traffic for each workload. Conventional virtual routers may assign the network traffic processing for network traffic associated with a workload to a processing core that is overworked in terms of the existing load the processing core has already been tasked with. Additionally, some processing cores may be "starved" by having a minimal load and would be better equipped to handle the network capabilities for the workload.

In accordance with the techniques described herein, controller 24 may provide for intelligent and dynamic balancing of one or more processing cores processing network traffic for workloads. Controller 24 may generate assignments for virtual router 21A to selectively assign different processing cores 30A to process network traffic for each of workloads 35. In some instances, controller 24 may reactively generate the assignments based on real-time metrics indicative of network traffic processing associated with each of workloads 35. However, controller 24 generating assignments based on real-time metrics may require continuous use of computational and networking resources. Controller 24 generating assignments based only on real-time metrics may result in assignments being generated after any of processing cores 30A are either overworked or starved. The techniques described herein may include one or more reinforcement learning agents (e.g., reinforcement learning agent 156) that apply a policy model (e.g., policy model 154) to generate assignments or a mapping of network traffic processing for workloads 35 to processing cores 30A. The techniques described herein may generate workload assignments based on a reinforcement learning agent applying the policy model to forecasted (or "predicted") network traffic loads to be processed by processing cores 30A. Controller 24 may determine forecasted network traffic loads-which may then be processed by the reinforcement learning agent applying the policy model-based on attributes and/or historical data associated with workloads 35 and/or processing cores 30A. In this way, controller 24 may proactively optimize network traffic processing of workloads 35.

In the example of FIG. 1, reinforcement learning agent 156 (also referred to herein as "RL agent 156") of controller 24 includes policy model 154 and RL algorithm 155. RL agent 156 may apply policy model 154 to forecasted network traffic loads to predict network traffic load to assign to a processing core of processing cores 130A. For example, RL agent 156 may input forecasted network traffic loads, as well as other attributes associated with workloads 35 and processing cores 30A, to a machine learning model (e.g., a neural network) of policy model 154 to determine which processing core of processing cores 30A to assign to process network traffic for a workload. RL agent 156 may perform actions by generating assignments associated with selecting a processing core to assign to a newly instantiated workload, reassigning the processing core for processing network traffic for an existing workload, and/or rebalancing the assignments of processing cores to network traffic for workloads. RL agent 156 may include generated assignments in assignment data 162.

Policy model 154 of RL agent 156 may specify actions or instructions that RL agent 156 may execute to generate assignments based on a version of a machine learning model included in policy model 154. RL agent 156 may update the version of the machine learning model of policy model 154 by providing reward signals to reinforcement learning algorithm 155. RL agent 156 may determine the reward signals based on state data 160 (e.g., a set of values RL agent 156 receives) associated with a performance of network traffic processing, some of which performance may result from earlier assignments generated by RL agent 156. RL agent 156 may determine the reward signals by providing state data 160 to a reward function. RL agent 156 may determine a reward signal with a reward function configured to maximize long term reward signals (e.g., reward signals over a period of time) (also referred to herein as "reward value") based on criteria associated with the optimization of processing of network traffic for workloads 35.

Policy model 154 may include one or more machine learning models that may be applied to generate assignments or a mapping of workloads 35 to processing cores of processing cores 30A. The one or more machine learning models may be trained with simulations (e.g., Monte Carlo based methods). The one or more machine learning models may include one or more classification algorithms (e.g., Multi Layer Perceptron, Deep Neural Networks, etc.). The one or more machine learning models may be trained with static data, such as historical assignment data, historical throughput data, processing cores 30A usage and/or type, workloads 35 requirements and/or type, profiles for workloads 35, profiles for processing cores 30A, etc. The types of machine learning models included in policy model 154 may be based on the type and/or volume of available training data (e.g., historical data associated with processing cores 30A and/or workloads 35).

Controller 24 may forecast network traffic loads, which RL agent 156 provides to policy model 154 to generate assignments. Controller 24 may forecast network traffic loads with machine learning algorithms that may include time series forecasting methods and that may include, but are not limited to, autoregressive integrated moving average (ARIMA), trigonometric seasonality box-cox transformation ARIMA errors trend seasonal components (TBATS), regression methods (Bayesian Ridge Regression, Random Forest Regressors, neural networks (long short-term memory (LSTM), recurrent neural network (RNN), etc.).

RL agent 156 may apply an initial version of policy model 154 to forecasted network traffic loads to generate assignments of network traffic of workloads 35 to processing cores 30A. RL agent 156 may provide the forecasted network traffic load, as well as other attributes (e.g., a profile and state of processing cores 30A, current allocation of processing cores 30A, current utilization of processing cores 30A, throughput and number of queues for each core of processing cores 30A, current throughput of workloads 35, prioritizations of workloads 35, profiles for workloads 35, etc.) to an initial version of the one or more machine learning models of policy model 154 to generate assignments of network traffic processing for workloads 35 to processing cores 30A. RL agent 156 may monitor the outcome of the generated assignments by collecting state values 160. RL agent 156 may update the machine learning models of policy model 154 based on state values 160.

RL agent 156 may determine reward signals for updating machine learning models of policy model 154. RL agent 156 may determine reward signals based on state data 160 that may include periodically obtained sets of values associated with processing cores 30A and network traffic for workloads 35. State data 160 indicates a state of the server 12A environment and is usable by the reinforcement learning agent. State data 160 may include values for attributes associated with processing cores 30A at a particular point or points in time. For example, state data 160 may include values associated with utilization of each processing core of processing cores 30A at a particular time, throughput of each processing core of processing cores 30A at a particular time, and/or number of queues per processing core of processing cores 30A. In some instances, state data 160 may include values associated with workloads 35 at a particular point or points in time. For example, state data 160 may include values such as tail drops associated with network traffic of workloads 35 over a period of time, jitter associated with network traffic of workloads 35 over a period of time, and/or packet latency over a period of time. In some examples, state data 160 may include values associated with processing cores 30A and values associated with workloads 35 during any period or periods of time. Virtual router 21A generates state data 160, which controller 24 may receive state data 160 from virtual router 21A via an application programming interface, such as Prometheus, a telemetry interface, or via another interface.

RL agent 156 may determine the reward signals by inputting state data 160 into a reward function configured according to criteria that maximizes a reward value (e.g., long term-reward signals). For example, RL agent 156 may configure the reward function according to criteria to maximize overall processing cores 30A utilization, minimize packet latency associated with an average time processing cores 30A process network traffic for workloads 35, minimize the number of idle processing cores of processing cores 30A, minimize the number of packet drops or tail drops associated with network traffic processing of workloads 35, prioritize network traffic of certain workloads of workloads 35, or some combination of the above.

RL agent 156 may implement the reward function to determine reward signals used to update policy model 154. For example, RL agent 156 may implement a reward function to reward or punish actions taken by RL agent 156 applying policy model 154. RL agent 156 may encourage or discourage actions taken by RL agent 156 based on whether the assignments generated by RL agent 156 results in state data 160 that satisfies or is within a certain threshold of satisfying pre-defined criteria. RL agent 156 may implement the reward function to punish or discourage actions taken by RL agent 156 applying policy model 154 when the assignments generated by RL agent 156 result in state data 160 that are beyond allowable values defined in the criteria. In some examples, software executing on server 12A, such as virtual router 21A, may calculate the reward signal based on the reward function and state data 160. In this example, server 12A may send the reward signal (e.g., an output of the reward function provided with state data 160) to RL agent 156.

RL algorithm 155 of RL agent 156 may update machine learning models of policy model 154. RL algorithm 155 may update policy model 154 based on actions taken by RL agent 156 applying policy model 154, one or more reward signals determined as a result of actions taken by RL agent 156, or observations RL agent 156 perceives as a result of actions taken by RL agent 156 (e.g., state data 160). RL algorithm 155 may update policy model 154 by adjusting parameters of a machine learning model of policy model 154 based on reward signals determined by RL agent 156. For example, in response to positive reward signals, RL algorithm 155 may update policy model 154 by reinforcing parameters of a machine learning model of policy model 154 associated with generating assignments of network traffic for workloads 35 to processing cores 30A. In response to negative reward signals, RL algorithm 155 may update policy model 154 by altering parameters of a machine learning model of policy model 154 associated with generating the assignments. RL algorithm 155 may include any type of reinforcement learning algorithm such as policy gradient methods. RL agent 156 may continuously or periodically generate improved assignments of network traffic for workloads 35 to processing cores 30A by applying updated policy models.

RL agent 156 may include generated assignments in assignment data 162. RL agent 156 may generate assignment data 162 to map or enqueue network traffic for workloads 35 to each of processing cores 30A. In some instances, controller 24 may include another module to generate assignment data 162 based on assignments generated by RL agent 156. Controller 24 may include a module that includes assignments generated by RL agent 156 in assignment data 162 based on a determination of whether assignments generated by RL agent 156 may result in a significant deviation from the pre-defined criteria or may result in network performance issues.

To instruct virtual router 21A with generated assignments of network processing for workloads 35 to individual processing cores 30A, controller 24 may send assignment data 162 to virtual router 21A. Assignment data 162 may include a mapping of a workload to a particular one of processing cores 30A to indicate virtual router 21A is to assign network traffic processing for the workload to the processing core. The workload may be identified in assignment data 162 using a workload identifier, name, or other identifier. A processing core may be identified in assignment data 162 using a processor ID, core ID, a combination thereof, or other identifier uniquely identifying a processing core of processing cores 30A. Assignment data 162 may include mappings for multiple workloads. Assignment data 162 may include predicted assignments generated by the policy model of controller 24. In response to the policy model of controller 24 being updated via reinforcement learning, controller 24 may update assignment data 162 with predicted assignments generated by the updated policy model.

Controller 24 may receive state data 160, implement a reward function to update the policy model, determine whether network traffic processing for a workload should be assigned to a different processing core, and instruct virtual router 21A to assign or reassign the network traffic processing for the workload in periodic intervals (e.g., every ten minutes).

Virtual router 21A may assign or reassign workloads 35 according to assignment data 162 from controller 24. Virtual router 21A then services (i.e., processes network traffic for) each of workloads 35 with the corresponding assigned one of processing cores 30A.

To process network traffic from a particular workload of workloads 35 with the assigned one of processing cores 30A, virtual router 21A may use parameters such as a name and identifier for a virtual router interface, one or more software queues associated with the network traffic of the workload, one or more hardware queues assigned to one or more corresponding forwarding cores of virtual router 21A associated with the assigned processing core, and an identifier for each of the plurality of processing cores. For example, network traffic for a workload (e.g., pod 38A or VM 36A) may be queued with a software queue, based on an assignment as described above, to a hardware queue that is mapped to a particular processing core. A thread of virtual router 21A (e.g., a forwarding core allocated by virtual router 21A to handle a corresponding hardware queue), executing on the processing core, services software queues of the workload to process the network traffic of the workload. Other threads of virtual router 21A may operate similarly for other processing cores to service respective hardware queues for those processing cores.

The techniques described herein may provide one or more technical advantages that realize one or more practical applications. For example, controller 24 more efficiently and effectively load balance workloads' network processing among processing cores 30A versus a static, round-robin assignment scheme. RL agent 156 of controller 24 may apply and continuously update one or more machine learning models of policy model 154 trained with historical data and updated via reinforcement learning to proactively rebalance and/or assign network processing for workloads 35 to processing cores 30A, rather than reactively rebalance or assign networking processing for workloads 35 to processing cores 30A based on real-time metrics. In this way, controller 24 may more effectively and efficiently determine assignments for network traffic processing for workloads 35 to processing cores 30A based on states or attributes associated with workloads 35 and/or processing cores 30A.

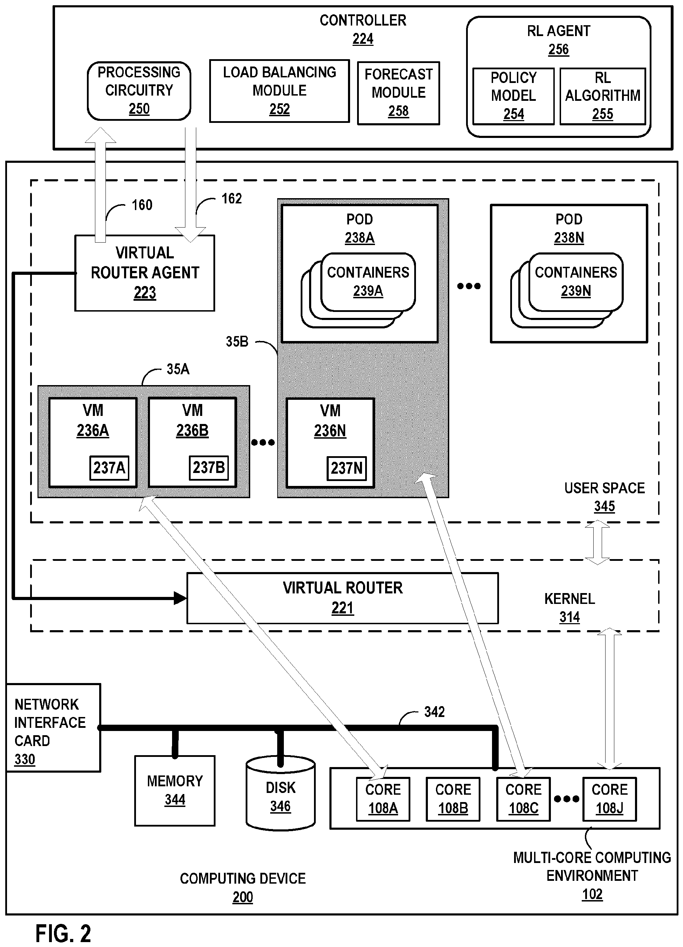

FIG. 2 is a block diagram illustrating an example computing device in which examples of the techniques described herein may be implemented. Computing device 200 may represent any servers 12 of FIG. 1 or another device, such as any of TOR switches 16.

Computing device 200 includes, in this example, a system bus 342 coupling hardware components of a computing device 200 hardware environment. System bus 342 couples memory 344, network interface card 330, storage disk 346, and multi-core computing environment 102 having a plurality of processing cores 108A-108J (collectively, "cores 108"). Network interface card 330 includes interfaces configured to exchange packets using links of an underlying physical network. Multi-core computing environment 102 may include any number of processors and any number of hardware cores from, for example, four to thousands. Each of cores 108 include an independent execution unit to perform instructions that conform to an instruction set architecture for the core. Cores 108 may each be implemented as separate integrated circuits (ICs) or may be combined within one or more multi-core processors (or "many-core" processors) that are each implemented using a single IC (i.e., a chip multiprocessor), package, or die.

Disk 346 represents computer readable storage media that includes volatile and/or non-volatile, removable and/or non-removable media implemented in any method or technology for storage of information such as processor-readable instructions, data structures, program modules, or other data. Computer readable storage media includes, but is not limited to, random access memory (RAM), read-only memory (ROM), EEPROM, flash memory, CD-ROM, digital versatile discs (DVD) or other optical storage, magnetic cassettes, magnetic tape, magnetic disk storage or other magnetic storage devices, or any other medium that can be used to store the desired information and that can be accessed by cores 108.

Main memory 344 includes one or more computer-readable storage media, which may include random-access memory (RAM) such as various forms of dynamic RAM (DRAM), e.g., DDR2/DDR3 SDRAM, or static RAM (SRAM), flash memory, or any other form of fixed or removable storage medium that can be used to carry or store desired program code and program data in the form of instructions or data structures and that can be accessed by a computer. Main memory 344 provides a physical address space composed of addressable memory locations.

Memory 344 may in some examples present a non-uniform memory access (NUMA) architecture to multi-core computing environment 102. That is, cores 108 may not have equal memory access time to the various storage media that constitute memory 344. Cores 108 may be configured in some instances to use the portions of memory 344 that offer the lowest memory latency for the cores to reduce overall memory latency.

In some instances, a physical address space for a computer-readable storage medium may be shared among one or more cores 108 (i.e., a shared memory). For example, cores 108A, 108B may be connected via a memory bus (not shown) to one or more DRAM packages, modules, and/or chips (also not shown) that present a physical address space accessible by cores 108A, 108B. While this physical address space may offer the lowest memory access time to cores 108A, 108B of any of portions of memory 344, at least some of the remaining portions of memory 344 may be directly accessible to cores 108A, 108B. One or more of cores 108 may also include an L1/L2/L3 cache or a combination thereof. The respective caches for cores 108 offer the lowest-latency memory access of any of storage media for the cores 108. When rebalancing, controller 224 may apply load balancing module 252 to rebalance network traffic processing for a particular workload to a different core that has similar memory access times as the previous core for the workload, e.g., from core 108A to 108B in the above example. Load balancing module 252 incorporating this rebalancing factor, i.e., similar memory access times, can improve performance.

Memory 344, network interface card 330, storage disk 346, and multi-core computing environment 102 provide an operating environment for a software stack that executes virtual router 221 and one or more virtual machines 236A-236N (collectively, "virtual machines 236"). Virtual machines 236 may represent example instances of any of virtual machines 36 of FIG. 1. The computing device 200 partitions the virtual and/or physical address space provided by main memory 344 and in the case of virtual memory by disk 346 into user space 345, allocated for running user processes, and kernel space 314, which is protected and generally inaccessible by user processes. An operating system kernel (not shown) may execute in kernel space and may include, for example, a Linux, Berkeley Software Distribution (BSD), another Unix-variant kernel, or a Windows server operating system kernel, available from Microsoft Corp. Computing device 200 may in some instances execute a hypervisor to manage virtual machines 236 (also not shown). Example hypervisors include Kernel-based Virtual Machine (KVM) for the Linux kernel, Xen, ESXi available from VMware, Windows Hyper-V available from Microsoft, and other open-source and proprietary hypervisors. In addition, virtual machines 236 may execute applications 237.

Pods 238A-238N (collectively "pods 238") may include containers 239A-239N (collectively "containers 239"). Containers 239 may include the virtualization of an operating system to run multiple isolated systems on a single machine (virtual or physical). Examples of containers 239 include containers provided by the open-source DOCKER container application or by CoreOS Rkt ("Rocket"). Like a virtual machine, each container is virtualized and may remain isolated from the host machine and other containers. However, unlike a virtual machine, each container may omit an individual operating system and instead provide an application suite and application-specific libraries. In general, a container is executed by the host machine as an isolated user-space instance and may share an operating system and common libraries with other containers executing on the host machine. Thus, container may require less processing power, storage, and network resources than virtual machines. A group of one or more containers may be configured to share one or more virtual network interfaces for communicating on corresponding virtual networks.

In some examples, containers are managed by their host kernel to allow limitation and prioritization of resources (CPU, memory, block I/O, network, etc.) without the need for starting any virtual machines, in some cases using namespace isolation functionality that allows complete isolation of an application's view of the operating environment, including process trees, networking, user identifiers and mounted file systems. In some examples, containers may be deployed according to Linux Containers (LXC), an operating-system-level virtualization method for running multiple isolated Linux systems (containers) on a control host using a single Linux kernel.

The virtual router in this example of computing device 200 includes a kernel space 314 module: virtual router 221, as well as a user space 345 module: virtual router agent 223. Virtual router 221 executes the "forwarding plane" or packet forwarding functionality of the virtual router and virtual router agent 223 executes the "control plane" functionality of the virtual router. Some instances of virtual router forwarding plane 221 may execute in user space (e.g., as a DPDK virtual router) or on a SmartNIC. Additional description of a virtual router agent and virtual router forwarding plane to implement a virtual router is found in U.S. Patent No. 9,571,394, issued February 14, 2017, which is incorporated by reference herein in its entirety.

When virtual router agent 223 for the virtual router receives an indication of a new workload deployed to computing device 200, virtual router agent 223 may initially assign a core of cores 108 to process the network traffic for the new workload (e.g., pods 238 or virtual machines 236).

In accordance with the techniques described herein, controller 224 may include processing circuitry 250, load balancing module 252, reinforcement learning (RL) agent 256, and forecast module 258. Load balancing module 252 may execute on processing circuitry 250 to generate assignment data 162 indicating what processing cores of cores 108 virtual router 221 should use to process networking traffic for workloads (e.g., VMs 236 or pods 238). Load balancing module 252 may generate assignment data 162 that may include a mapping of workloads 35 to cores 108. RL agent 256 is configured to execute on processing circuitry 250 or computing device 200 to apply policy model 254 to generate or determine assignments of workloads 35 to cores 108 that may be included in assignment data 162. Forecast module 258 is configured to execute on processing circuitry 250 to determine forecasted attribute values, such as a forecasted network traffic load associated with workloads 35 and cores 108. Forecast module 258 may forecast network traffic loads for any time in the future using any machine learning forecasting methods (e.g., ARIMA, TBATS, regression methods, neural networks, etc.). Forecast module 258 may provide the forecasted network traffic loads to RL agent 256.

RL agent 256 may perform actions by generating assignments of cores 108 to workloads 35. RL agent 256 may perform actions by generating assignments that select or pick a core of cores 108 to assign to network traffic of a new or existing workload. RL agent 256 may perform actions by generating assignments that rebalance or reallocate cores 108 assigned to process network traffic for particular workloads. RL agent 256 may generate assignments of workloads 35 to cores 108 by applying policy model 254 to forecasted attribute values determined by forecast module 258. RL agent 256 may provide the predicted assignments to load balancing module 252. Load balancing module 252 may determine whether to include a predicted assignment generated by one agent of RL agent 256 in assignment data 162.

In the example of FIG. 2, RL agent 256 may include policy model 254 and reinforcement learning ("RL") algorithm 255. Policy model 254 may include a policy for generating predicted assignments of network traffic for workloads 35 to cores 108. RL agent 256 may generate an initial set of predicted assignments by applying an initial policy for policy model 254. Policy model 254 may include a policy comprising one or more machine learning models configured to instruct RL agent 256 to perform actions of generating assignments. Policy model 254 may include a machine learning model trained with static data, such as historical assignment data (e.g., assignment data generated by load balancing module 252), cores 108 usage and/or type, workloads 35 requirements and/or type, profiles for workloads 35, profiles for cores 108, etc. In some instances, policy model 254 may include a machine learning model trained with simulations (e.g., Monte Carlo based methods). In some instances, RL agent 256 may perform the action of selecting a core of cores 108 to assign to a workload using one or more classification algorithms (e.g., Multi Layer Perceptron, Deep Neural Networks, etc.) for classifying cores 108 and/or workloads 35.

Controller 224 may generate or receive a profile for a type of workload. Controller 224 may generate the profile based on the one or more real-time metrics associated with processing network traffic for the type of workload. In some examples, controller 224 may apply a machine learning model, trained with the real-time metrics, to generate the profile based on patterns of network traffic associated with the type of workload. Relevant patterns of network traffic discernible from the real-time metrics may include, e.g., amount of traffic or periodicity of traffic (e.g., traffic highest during evenings or on weekends), which may be used to predict CPU utilization patterns by the traffic also included in the real-time metrics. For example, controller 224 may learn a typical CPU core usage by various instances of virtual router 221 in use within a system to process network traffic for the type of workload based on the one or more real-time metrics. Controller 224 may generate a profile of the type of workload based on its typical CPU core usage. RL agent 256 may obtain profiles for workloads and apply policy model 254 to the profiles to generate assignments.

In some instances, controller 224 may not receive metrics to classify workloads or generate profiles for types of workloads that may be used to generate the initial policy model. In such instances, RL agent 256 may apply policy model 254 to forecasted network traffic associated with workloads 35. Forecast module 258 of controller 224 may determine forecasted network traffic based on historical throughput associated with network traffic for workloads. Forecast module 258 may collect historical throughput data (e.g., packets per second) of unclassified workloads. Forecast module 258 may determine forecasted network traffic loads by using machine learning forecasting methods. For example, forecast module 258 may forecast network traffic loads with time series forecasting methods, such as ARIMA, TBATS, or regression methods (e.g., Bayesian Ridge Regression, Random Forest Regression, Neural Networks, etc.). Forecast module 258 may determine forecasted network traffic loads based on attributes and/or historical data associated with workloads 35 and/or cores 108. For example, forecast module 258 may predict - for a period of time in the future (e.g., 30 seconds, 60 seconds, etc.) - a spike or an increment increase in processing core utilization for a particular workload based on collected historical throughput data. RL agent 256 may obtain a forecasted network traffic load associated with workloads 35 from forecast module 258. RL agent 256 may generate assignments of workloads 35 to cores 108 by applying policy model 254 to the forecasted network traffic loads. In some examples, RL agent 256 may apply policy model 254 to additional attributes, such as processing core status (e.g., active, inactive, available, reserved, etc.), packet or tail drops, workload prioritization, packet latency, or the like, to generate assignments. RL agent 256 may send the generated assignments to load balancing module 252 to generate assignment data 162.

RL agent 256 may perform actions of generating assignments based on the policy maintained by policy model 254. In some instances, RL agent 256 may implement supervised learning algorithms that provide direct, user feedback on the performance of RL agent 256 generating predicted assignments. RL agent 256 may learn over time what the best possible actions (e.g., generating mappings or assignments of network traffic for workloads 35 to cores 108) are to maximize reward signals calculated with a reward function.

RL agent 256 may apply a reward function to calculate reward signals for actions taken by RL agent 256. RL agent 256 may apply a reward function defined as a combination of all desired values for attributes resulting from computing device 200 implementing assignment generated by RL agent 256. In some instances, computing device 200 may apply the reward function to determine reward signals for actions taken by RL agent 256. Computing device 200 may send the reward signals to RL algorithm 255 of RL agent 256.

In some examples, a reward function may be defined according to pre-defined criteria. The reward function may be defined according to criteria, such as maximum overall utilization of cores 108, minimize latency associated with an average time cores 108 process network traffic for workloads 35, minimize the number of idle cores 108, minimize the number of packet or tail drops. In some instances, a reward function may be defined as a weighted sum of all the attributes (e.g., cores 108 throughput, utilization of cores 108, tail drops, jitter, packet latency, etc.) input in a machine learning model of policy model 254. The reward function may be defined to minimize attributes (e.g., minimize packet latency or minimize the number of idle cores 108) by attaching a negative weight to the attribute value and/or taking the inverse of the attribute value. The reward function may be defined to maximize attributes (e.g., maximize overall utilization of cores 108) by attaching a positive weight to the attribute based on the importance of maximizing the attribute. A reward function may be defined such that each attribute is associated with a corresponding bias specific to the pre-defined criteria.

RL agent 256 or computing device 200 may calculate reward signals for actions taken by RL agent 256 based on the reward function. For example, RL agent 256 may calculate a reward signal for an action (e.g., a rebalancing of cores 108 to workloads 35) taken by RL agent 256 based on a state, or result, of the assignments generated by RL agent 256. RL agent 256 may obtain the state (e.g., state data 160) of a generated assignment and input attribute values associated with the obtained state in the reward function. RL agent 256 may calculate the reward based on the output of the reward function. For example, RL agent 256 may periodically collect state data 160 associated with current attribute values associated with workloads 35 and/or cores 108. In some instances, state data 160 may include values associated with processing cores 108 at a particular point or points in time. For example, state data 160 may include values associated with utilization of each processing core of processing cores 108 at a particular time, throughput of each processing core of processing cores 108 at a particular time, and/or number of queues per processing core of processing cores 108. In some instances, state data 160 may include values associated with workloads 35 at a particular point or points in time. For example, state data 160 may include values such as tail drops associated with network traffic of workloads 35 over a period of time, jitter associated with network traffic of workloads 35 over a period of time, and/or packet latency associated with network traffic of workloads 35 over a period of time. In some examples, state data 160 may include values associated with cores 108 and values associated with workloads 35 during any period or periods of time. RL agent 256 may receive state data 160 from virtual router agent 223 via an application programming interface, such as Prometheus, a telemetry interface, or via another interface.

RL agent 256 may update policy model 254 with reinforcement learning algorithm 255. RL algorithm 255 may update policy model 254 by based on reward signals calculated for actions taken by RL agent 256. For example, RL algorithm 255 may slightly adjust parameters of a machine learning model of policy model 254 in response to an average reward signal value. In contrast, RL algorithm 255 may drastically change (e.g., punish) parameters of a machine learning algorithms of policy model 254 in response to a low reward signal value. For example, a reward function may be defined to prioritize network traffic processing of workload 35A. RL agent 256 may take an action by generating a predicted assignment that did not prioritize network traffic processing of workload 35A. RL algorithm 255 may levy a penalty or otherwise punish the action taken by RL agent 256 by altering parameters, biases, equations, etc. of the machine learning model underlying the policy of policy model 254. RL agent 256 may track reward values based on calculated reward signals over a period of time.

In some instances, load balancing module 252 may generate assignment data 162 based on the predicted assignments provided by RL agent 256. For example, RL agent 256 may determine an assignment of a workload to a first processing core by applying policy model 254 and load balancing module 252 may determine an assignment based on real-time metrics (e.g., current loads of cores 108 or network traffic processing requirements of workloads 35). Load balancing module 252 may select the assignment determined by RL agent 256 rather than the assignment determined based on real-time metrics. Load balancing module 252 may include the assignment determined by RL agent 256 is assignment data 162. In some instances, load balancing module 252 may generate assignment data 162 based on real-time metrics obtained from virtual router agent 223 in response to load balancing module 252 determining assignments generated based on the real-time metrics results in a more balanced distribution of network traffic for workloads 35 to cores 108 compared to the predicted assignments generated by RL agent 256. Load balancing module 252 may send assignment data 162 to virtual router agent 223.

Virtual router agent 223 may apply assignment data 162 to assign or reassign which core of cores 108 virtual router 221 uses to process network traffic for workloads 35A and 35B. In this example, virtual router 221 may use core 108A when processing networking traffic for workload 35A and core 108C when processing network traffic for workload 35B, according to assignment data 162.

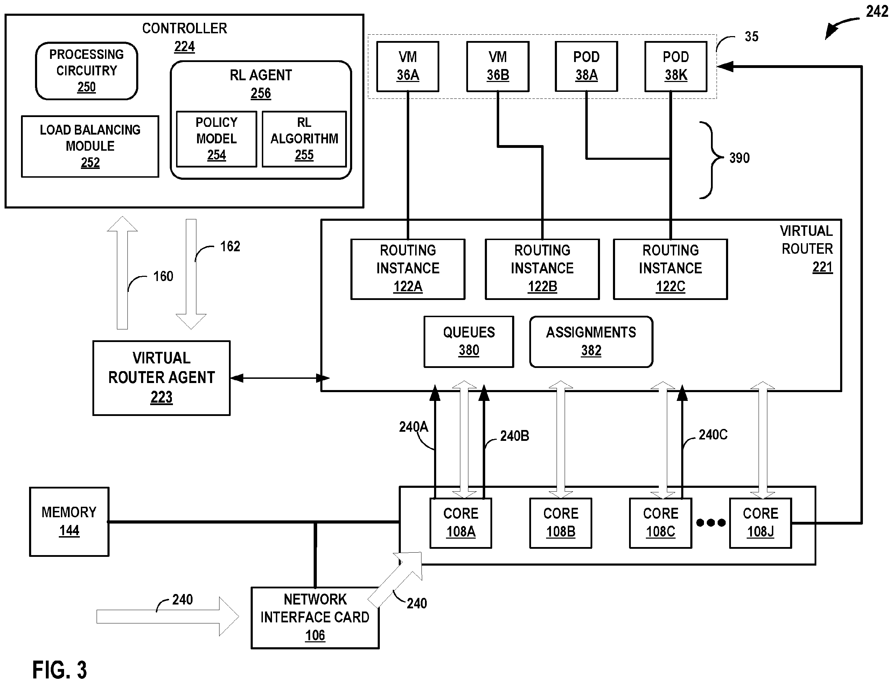

FIG. 3 is a block diagram illustrating example components of example computing device 242 that executes a virtual router 221 for virtual networks according to techniques described herein. Computing device 242 may be an example of computing device 200 of FIG. 2, or of any of servers 12 of FIG. 1, or another computing device described in this disclosure.

Example computing device 242 includes network interface card (NIC) 106 that is configured to direct packets received by NIC 106 to processing core 108A for processing. As illustrated, NIC 106 receives packet flows 240A-240C (collectively, "packet flows 240") and may store packet flows 240 to memory 144 for eventual processing by virtual router 221. Likewise, network traffic output by workloads via virtual network interfaces 390 to virtual router 221 is stored to memory 144 for eventual processing by virtual router 221.

Virtual router 221 includes multiple routing instances 122A-122C (collectively, "routing instances 122") for corresponding virtual machine 236A-236K (collectively, virtual machines 236). Virtual router 221 uses routing instances 122 to process packet flows 240 sourced by or destined to particular workloads 35 according to workload assignments 382 that map each of workloads 35 to an assigned core of cores 108. Virtual router 221 may enqueue network traffic processing for workloads 35 using queues 380. Further description of hardware queues, DPDK, and software queues for workload interfaces (virtual interfaces) is included in U.S. Publication No. 2022/0278927, published September 1, 2022, which is incorporated by reference herein in its entirety.

Queues 380 may enqueue network traffic processing based on a mapping of assignments of workloads 35 to cores 108 provided by assignments 382. Virtual router agent 223 may update assignments 382 to update mappings based on assignment data 162. Assignments 382 may be based on assignment data 162 sent by controller 224. Assignment data 162 may be a mapping of which core of cores 108 should process network traffic for each workload of workloads 35.

In this example, network interface card 106 receives packet flows 240. Network interface card 106 may store packet flows 240 to memory 144 for eventual processing by virtual router 221 executing on one or more of cores 108. In this example, packet flow 240A is destined to VM 36A, packet flow 240B is destined to VM 36B, and packet flow 240C is destined to pod 38A. Virtual router 221 may use mappings of workloads 35 to cores 108 included in assignments 382 to determine which core of cores 108 will process packet flows corresponding to each workload (e.g., VM 36A, VM 36B, and pod 38A). Virtual router 221 may, for example, use queues 380 to enqueue packet flow 240A to be processed with core 108A, enqueue packet flow 240B to be processed with core 108A and enqueue packet flow 240C to be processed with core 108C. A similar process may be applied for packet flows sourced by each of the workloads.

In accordance with the techniques described herein, controller 224 may generate assignment data 162 for assignments 382 based on assignments generated by RL agent 256 applying policy model 254. RL agent 256 may include policy model 254 comprising a policy for predicting mappings of workloads 35 to cores 108 to satisfy one or more criteria. For example, policy model 254 may manage a policy that includes one or more machine learning algorithms (e.g., neural networks) for predicting mappings of workloads 35 to cores 108 based on criteria developed to maximize overall throughput, while minimizing utilization of each core of cores 108, throughput of each core of cores 108, number of idle cores 108, packet latency, jitter, tail drops, etc.

RL agent 256 may apply policy model 254 to a forecasted network traffic load determined by forecast module 258. RL agent 256 may obtain a forecasted network traffic load associated with workloads 35 from forecast module 258. Forecast module 258 may determine forecasted network traffic loads by using machine learning forecasting methods. For example, forecast module 258 may forecast network traffic loads with time series forecasting methods, such as ARIMA, TBATS, or regression methods (e.g., Bayesian Ridge Regression, Random Forest Regression, Neural Networks, etc.). Forecast module 258 may determine forecasted network traffic loads based on attributes and/or historical data associated with workloads 35 and/or cores 108 (e.g., a workload profile, a processing core profile, historical throughput, etc.). RL agent 256 may generate assignments of workloads 35 to cores 108 by providing the forecasted network traffic loads to the policy of policy model 254. RL agent 256 may send the assignments to load balancing module 252 to generate assignment data 162.

RL agent 256 may generate optimize mappings of network traffic for workloads 35 to cores 108 by updating policy model 254 with reinforcement algorithm 255. RL agent 256 and/or virtual router 221 may determine reward signals for actions taken by RL agent 256. For example, RL agent 256 may calculate a reward signal for assignments generated by RL agent 256 based on state data 160 including a set of values corresponding a state or result of the environment responsive to virtual router 221 implementing assignments generated by RL agent 256. RL algorithm 255 may update the policy model 254 based on one or more calculated reward signals. RL agent 256 may generate assignments or mappings of network traffic for workloads 35 to cores 108 by applying updated versions of policy model 254.

RL agent 256 may send the mappings to load balancing module 252. In some instances, load balancing module 252 may determine whether to include the predicted mappings when generating assignment data 162. In some examples, policy model 254 and/or load balancing module 252 may monitor real-time metrics, such as current active cores 108 utilization, to promptly generate assignment data 162 that may include mappings of network traffic for workloads 35 to cores 108 that are reactive to any of cores 108 being overworked or starved. Load balancing module 252 may send assignment data 162 to virtual router agent 223. Virtual router agent 223 may reconfigure assignments 382 to map network processing of VM 36B (associated with packet flow 240B) to core 108B. Virtual router 221 will apply the reconfigured assignments 382 to enqueue packet flow 240B to queue 380 to be processed by virtual router 221 executing on core 108B. Virtual router 221 may obtain network traffic for workloads 35 based on the queue, prior to processing the network traffic for the workload.

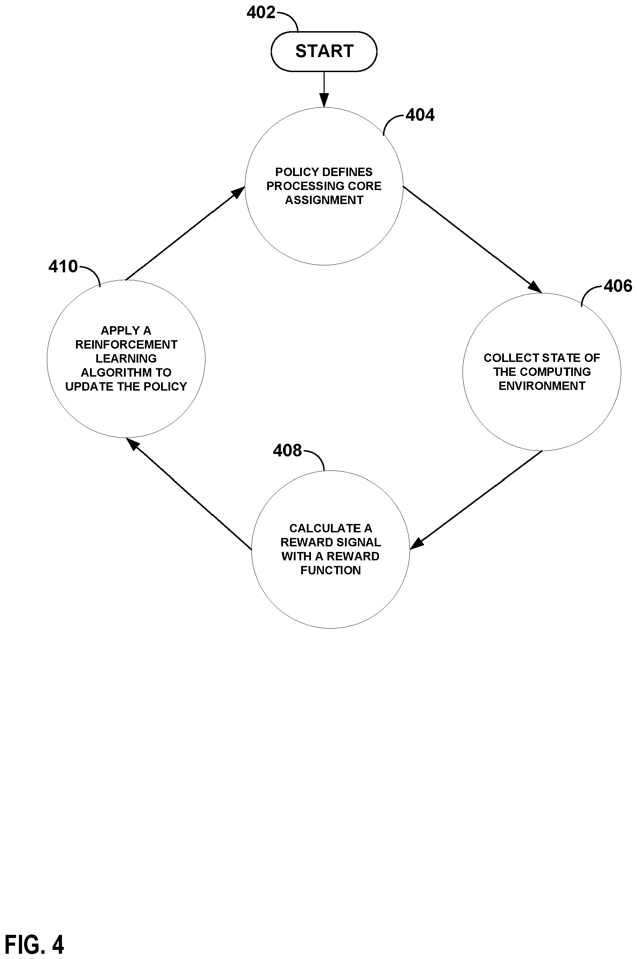

FIG. 4 is a conceptual diagram illustrating an example operation of a reinforcement learning agent to assign network traffic processing for workloads to processing cores, in accordance with techniques described herein. FIG. 4 discussed with respect to FIGS. 1-3 for example purposes only.

Policy model 254 may be instantiated with an initial policy for generating assignments of network traffic for workloads 35 to cores 108 (402). Policy model 254 may include a policy comprising one or more machine learning models (e.g., a neural network) trained with historical data associated with workloads 35 and/or cores 108. In some examples, policy model 254 may include a policy comprising a machine learning model trained with simulation methods (e.g., Monte-Carlo based methods). RL agent 256 applies policy model 254, which defines the assignment of network traffic loads for workloads 35 to cores 108 for processing by virtual router 221 (404). In some examples, RL agent 256 may apply policy model 254 to rebalance assignments of network traffic of workloads 35 to cores 108. In some examples, RL agent 256 may apply policy model 254 to determine an assignment of network traffic processing for a new workload to a core of cores 108. RL agent 256 may send the generated assignments to load balancing module 252 to generate assignment data 162. Assignments 382 of virtual router 221 may implement assignment data 162. In some instances, RL agent 256 may send the generated assignments directly to assignments 382.

RL agent 256 may collect a state of computing environment 8 (406). RL agent 256 may collect states of computing environment 8 such as utilization of cores 108, throughput on a per processing core of cores 108 basis, number of queues per processing core of cores 108, tail drops, jitter, and/or packet latency. RL agent 256 may calculate a reward signal with a reward function (408). RL agent 256 may calculate a reward signal based on the collected state of computing environment 8 (e.g., state data 160). RL agent 256 may calculate the reward signal with a reward function configured to minimize per utilization of cores 108, minimize per cores 108 throughput, minimize the number of idle processing cores of cores 108, minimize packet latency, minimize jitter, minimize tail drops, and/or maximize overall throughput.

RL agent 256 may apply RL algorithm 255 to update the policy of policy model 254 based on the calculated reward signal (410). RL agent 256 may provide RL algorithm 255 (e.g., Policy Gradient Methods) with determined reward signals to update the policy. RL agent 256 may then repeat steps 404-410 with the updated policy and future collected state data.

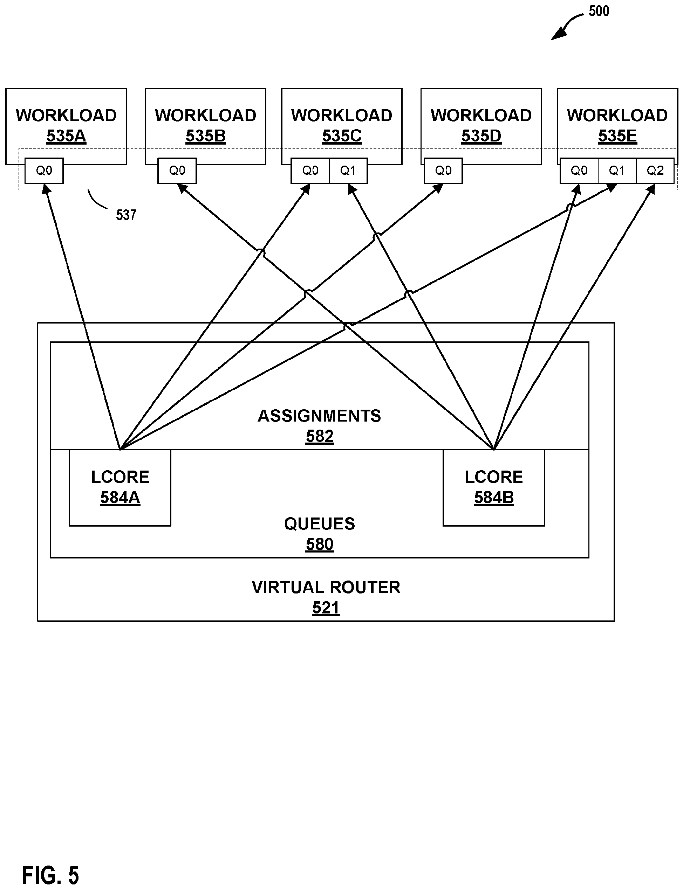

FIG. 5 is a block diagram illustrating example components of an example computing device 500 that executes workloads and a virtual router for virtual networks according to techniques described herein. Virtual router 521 may represent an example instance of virtual router 221 in FIG.3. Virtual router 521 may include queues 580 and assignments 582 which may represent an example instance of queues 380 and assignments 382 of FIG. 3 respectively. Queues 580 may include one or more forwarding cores (e.g., lcore 584A and lcore 584B), wherein each forwarding core is associated with a hardware core a NIC (e.g., NIC 106 of FIG. 3) uses when processing traffic on a corresponding processing core (e.g., cores 108 of FIG. 3).

Virtual router 521 may have forwarding cores lcore 584A and lcore 584B associated with hardware queues assigned by a NIC connected to virtual router and configured with a virtual router interface. When a workload (e.g., workloads 535A-E) is created, a virtual interface of the workload may have one or more software queues (e.g., software queues 537), where each software queue is assigned to a forwarding core of virtual router 521 via assignments 582. Typically, assignments 582 assigns allocated forwarding cores of queues 580 to software queues of workloads (e.g., software queues 537) in a round-robin manner. For example, software queue Q0 of workload 535A may be assigned to lcore 584A, software queue Q0 of workload 535B may be assigned to lcore 584B, software queue Q0 of workload 535C may be assigned to lcore 584A, software queue Q1 of workload 535C may be assigned to lcore 584B, software queue Q0 of workload 535D may be assigned to lcore 584A, software queue Q0 of workload 535E may be assigned to lcore 584B, software queue Q1 of workload 535E may be assigned to lcore 584A, software queue Q2 of workload 535E may be assigned to lcore 584B, and so forth.

In another example, a virtual router may have allocated four forwarding cores corresponding to four hardware queues to service network traffic of a plurality workloads each associated with one or more software queues. The following example assignment of software queues to forwarding cores of a virtual router, which is distinct from the example provided in FIG. 5, demonstrates how software queues are typically assigned to forwarding cores in a round-robin manner. First, a virtual router obtains a physical function from a NIC and allocates the same number of hardware queues in the NIC (identified by HW Queue ID) as the number of forwarding cores (identified by Lcore) of the virtual router (identified by Virtual Router Interface). In this example, NIC has four hardware queues which results in the virtual router allocating four forwarding cores, one for each hardware queue.

| Lcore 584C: | | |
|---|---|---|
| | Virtual Router Interface: 0000:17:01.1 | HW Queue ID: 0 |

| Lcore 584D: | | |
|---|---|---|
| | Virtual Router Interface: 0000:17:01.1 | HW Queue ID: 1 |

| Lcore 584E: | | |
|---|---|---|
| | Virtual Router Interface: 0000:17:01.1 | HW Queue ID: 2 |

| Lcore 584F: | | |
|---|---|---|
| | Virtual Router Interface: 0000:17:01.1 | HW Queue ID: 3 |

Second, when workloads are created or instantiated, one or more software queues (identified by SW Queue ID) of each workload (identified by Workload Interface) are assigned to each forwarding core of the virtual router in a round-robin manner.

| Lcore 584C: | | | |
|---|---|---|---|
| | Virtual Router Interface: 0000:17:01.1 | | HW Queue ID: 0 |
| | | Workload Interface: vhostnet1-XXX-a1 SW Queue ID: 0 | |
| | | Workload Interface: vhostnet1-XXX-b1 SW Queue ID: 0 | |
| | | Workload Interface: vhostnet1-XXX-c1 SW Queue ID: 0 | |
| | | Workload Interface: vhostnet1-XXX-d1 SW Queue ID: 0 | |

| Lcore 584D: | | | |
|---|---|---|---|
| | Virtual Router Interface: 0000:17:01.1 | | HW Queue ID: 1 |
| | | Workload Interface: vhostnet1-XXX-a2 SW Queue ID: 0 | |
| | | Workload Interface: vhostnet1-XXX-b1 SW Queue ID: 1 | |
| | | Workload Interface: vhostnet1-XXX-c2 SW Queue ID: 0 | |
| | | Workload Interface: vhostnet1-XXX-d2 SW Queue ID: 0 | |

| Lcore 584E: | | | |
|---|---|---|---|
| | Virtual Router Interface: 0000:17:01.1 | | HW Queue ID: 2 |
| | | Workload Interface: vhostnet1-XXX-a3 SW Queue ID: 0 | |
| | | Workload Interface: vhostnet1-XXX-b1 SW Queue ID: 2 | |
| | | Workload Interface: vhostnet1-XXX-c2 SW Queue ID: 1 | |

| Lcore 584F: | | | |
|---|---|---|---|
| | Virtual Router Interface: 0000:17:01.1 | | HW Queue ID: 3 |
| | | Workload Interface: vhostnet1-XXX-a3 SW Queue ID: 1 | |
| | | Workload Interface: vhostnet1-XXX-b2 SW Queue ID: 0 | |
| | | Workload Interface: vhostnet1-XXX-c2 SW Queue ID: 2 | |

However, forwarding cores of virtual router 21A may become unbalanced when workloads are created and/or deleted because virtual router 21A does not proactively reassign software cores of the workload to forwarding cores. For example, workloads with workloads interfaces of vhostnet1-XXX-a3, vhostnet1-XXX-b2, and vhostnet1-XXX-c2 may be deleted and a workload with a workload interface of vhostnet1-XXX-e1 may be created with only one software queue, which results in the following:

| Lcore 584C: | | | |
|---|---|---|---|
| | Virtual Router Interface: 0000:17:01.1 | | HW Queue ID: 0 |
| | | Workload Interface: vhostnet1-XXX-a1 SW Queue ID: 0 | |
| | | Workload Interface: vhostnet1-XXX-b1 SW Queue ID: 0 | |
| | | Workload Interface: vhostnet1-XXX-c1 SW Queue ID: 0 | |
| | | Workload Interface: vhostnet1-XXX-d1 SW Queue ID: 0 | |

| Lcore 584D: | | | |
|---|---|---|---|
| | Virtual Router Interface: 0000:17:01.1 | | HW Queue ID: 1 |
| | | Workload Interface: vhostnet1-XXX-a2 SW Queue ID: 0 | |
| | | Workload Interface: vhostnet1-XXX-b1 SW Queue ID: 1 | |
| | | Workload Interface: vhostnet1-XXX-c2 SW Queue ID: 0 | |
| | | Workload Interface: vhostnet1-XXX-d2 SW Queue ID: 0 | |

| Lcore 584E: | | | |
|---|---|---|---|
| | Virtual Router Interface: 0000:17:01.1 | | HW Queue ID: 2 |
| | | Workload Interface: vhostnet1-XXX-b1 SW Queue ID: 2 | |
| | | Workload Interface: vhostnet1-XXX-c2 SW Queue ID: 1 | |
| | | Workload Interface: vhostnet1-XXX-e1 SW Queue ID: 0 | |

| Lcore 584F: | | | |
|---|---|---|---|
| | Virtual Router Interface: 0000:17:01.1 | | HW Queue ID: 3 |

This example demonstrates how the dynamic nature of deleting and creating workloads results in an uneven distribution of software queues to forwarding cores. Here, Lcore 584F is not assigned any software queues while Lcore 584C and Lcore 584D are assigned four software queues. If the assignment of software queues to forwarding queues continues in a round-robin manner, the inequality of software queues assigned to forwarding cores may never be resolved.

In accordance with techniques of this disclosure, assignments of software queues 573 to a forwarding core of lcores 584 may be proactively redefined based on a policy model. In some instances, an external controller (e.g., controller 224 of FIG. 3) may be configured with reinforcement learning agents (e.g., RL agent 256) that apply a policy model (e.g., policy model 254) for generating predicted assignments of network traffic for workloads 535 (e.g., software queues 537) to lcores 584 that may correspond to cores of cores 108. Controller 224 may obtain states associated with computing environment 8 (e.g., state data 160), such as utilization of cores 108, throughput for each of cores 108, a number of hardware queues of cores 108, tail drops associated with network traffic of workloads 535, jitter associated with network traffic of workloads 535, packet latency associated with an average time cores 108 process network traffic for workloads 535, or the like. Policy model 252 may include a policy comprising a machine learning model trained with static data, such as real-time metrics associated with workloads 535 and/or cores 108, profiles for workloads 535, properties of cores 108, historical throughput data, or the like.

Reinforcement learning agent 256 may apply policy model 254 to output assignments of network traffic for workloads 535 to cores 108. In the example of FIG. 5, reinforcement learning agent 256 may apply policy model 254 to output assignments of software queues 537 of workloads 535 to forwarding cores 584 of virtual router 521. Reinforcement learning agent 256 may output assignments by providing forecasted network traffic loads determined by forecast module 258. Forecast module 258 may forecast a network traffic load associated with workloads 535 based on one or more machine learning forecasting methods. In some instances, controller 224 may obtain state data 160 indicating a number of hardware queues corresponding to each of lcores 584 and historical throughput data associated with each of lcores 584. Reinforcement learning agent 256 may input state data 160 and historical throughput data into one or more machine learning models of policy model 254 to generate assignments. In some examples, reinforcement learning agent 256 may input profiles associated with workloads 535 as an input to the one or more machine learning models of policy model 254 to generate assignments.

In the example of FIG. 5, controller 224 may obtain state data 160 and profiles associated with workloads 535 to train one or more machine learning models of policy model 254. For example, controller 224 may obtain state data 160 indicating lcore 584A has four hardware queues and is expected to complete processing of network traffic associated with software queues 537 in the near future. Controller 224 may obtain state data 160 indicating lcore 584B has six hardware queues with low throughput and is expected to continue processing network traffic associated with software queues 537 for some amount of time in the future. Controller 224 may also obtain profile for workloads 535. For example, controller 224 may obtain a profile for workload 535A indicating workload 535A has one software queue with low current throughput but with a high predicted throughput.

Reinforcement learning agent 256 may apply policy model 254 to generate assignments based on the output of the machine learning model of policy model 254. For example, reinforcement learning agent 256 may apply policy model 254 to determine a new workload is to be created with a high predicted throughput based on the workload profile provided to a machine learning model of policy model 252. Reinforcement learning agent 256 may generate an assignment of the new workload to lcore 584A by applying policy model 252 to forecasted network traffic loads indicating lcore 584A will complete processing of current network traffic in the near future. Rather than simply assigning the new workload to lcore 584B because real-time metrics indicate lcore 584B has a low throughput with lots of hardware queues, reinforcement learning agent 256 may generate an assignment to assign the new workload to lcore 584A because reinforcement learning agent 256 predicted that lcore 584A may be starved in the near future based on outputs of machine learning algorithms of policy model 254. In this way, reinforcement learning agent 256 may apply policy model 252 to provide a proactive approach to generating assignments of software queues 537 to lcores 584.

In general, any operations of the external controller described above (e.g., controller 224 of FIG. 3) may be done by a virtual router (e.g., virtual router 221 of FIG. 3), a virtual router agent (e.g., virtual router agent 223 of FIG. 3), or any other server components included in the techniques described herein.

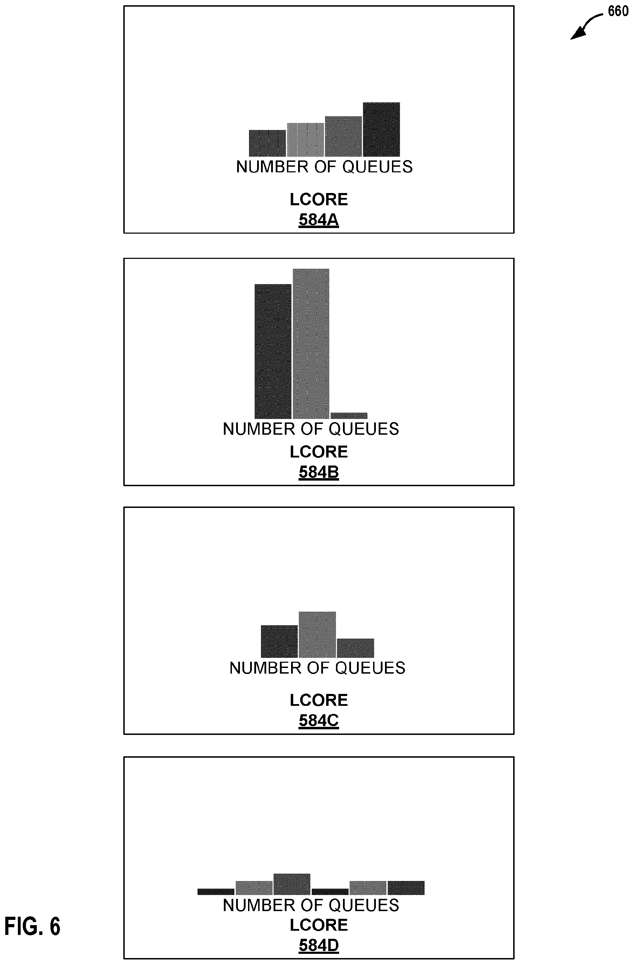

FIG. 6 is a conceptual diagram illustrating example data 660 for generating predicted assignments, in accordance with techniques described herein. FIG. 6 is discussed with respect to FIGS. 1-7 for example purposes only. For example, data 660 may be an example of state data 160 of FIG. 1.

Controller 224 may obtain data 660 to train reinforcement learning agent 256 to apply and update policy model 252 for generating predicted assignments of network traffic for workloads 535 to lcores 584. In the example of FIG. 6, data 660 may indicate a number of hardware queues for each of lcores 584 (x-axis) and a throughput in packets per seconds (PPS) for each hardware queue oflcores 584 (y-axis). Lcore 584A may have four hardware queues with average throughput values for each queue. Lcore 584B may have three hardware queues with high throughput for two of the queues and low throughput for one of the queues. Lcore 584C may have three hardware queues with average throughput for each queue. Lcore 584D may have six hardware queues with low throughput for each queue.

In accordance with the techniques described herein, reinforcement learning agent 256 may receive indications of the time lcores 584 may complete processing of network traffic for workloads. For example, reinforcement learning agent 256 may receive an indication that lcore 584A is expected to continue processing network traffic associated with the indicated throughput for a while. Reinforcement learning agent 256 may receive an indication that lcore 584B is expected to continue processing network traffic associated with the indicated throughput for a while. Reinforcement learning agent 256 may receive an indication that lcore 584C is expected to complete processing network traffic associated with the indicated throughput in the near future. Reinforcement learning agent 256 may receive an indication that lcore 584D is expected to continue processing network traffic associated with the indicated throughput for a while. In some instances, reinforcement learning agent 256 may generate the indication of how long the processing by a forwarding core may take based on the forecasted network traffic load determined by the forecast module 258.

Reinforcement learning agent 256 may input data 660, along with these indications, into one or more machine learning models of policy model 254 to output assignments of network traffic for a workload to lcores 584. For example, reinforcement learning agent 256 may receive an indication of a new workload to be assigned to a forwarding core of lcores 584. Rather than simply assigning network traffic for the new workload to lcore 584D due to a low aggregate throughput, reinforcement learning agent 256 may apply policy model 254 to generate an assignment of network traffic for the new workload to lcore 584C due to forecasted network traffic loads indicating processing by lcore 584C may be complete in the near future. In this way, reinforcement learning agent 256 may forecast that lcore 584C may be starved in the near future and generate an assignment to provide lcore 584C with work prior to lcore 584C being starved.

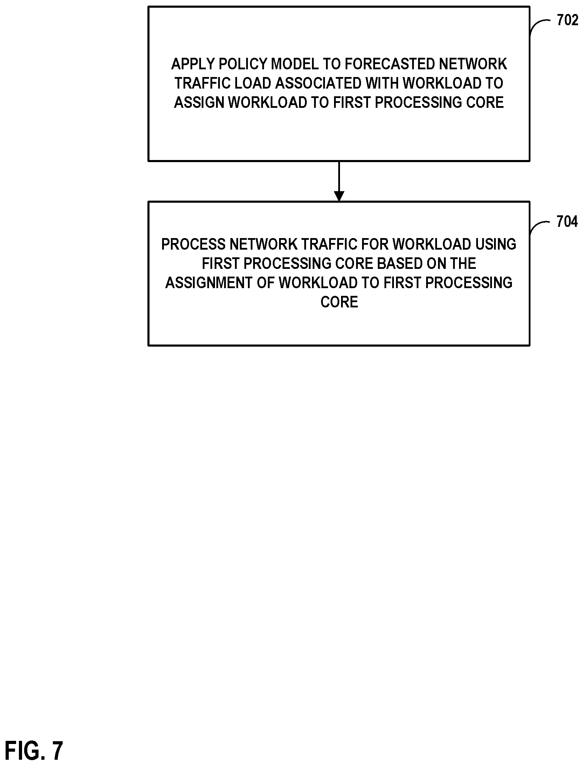

FIG. 7 is a flowchart illustrating an example operation of a method in accordance with techniques described herein. FIG. 7 is discussed with respect to FIGS. 1-6 for example purposes only.

A computing device (e.g., controller 224) may include a reinforcement learning agent (e.g., RL agent 254) that applies a policy model to a forecasted network traffic load associated with a workload to assign the workload to a first processing core of a plurality of processing cores of the computing device (702). A virtual router (e.g., virtual router 221) executing on the first processing core may process the network traffic for the workload based on the assignment of the workload to the first processing core of step 702 (704).

The techniques described herein, including any of the preceding sections, may be implemented in hardware, software, firmware, or any combination thereof. Various features described as modules, units or components may be implemented together in an integrated logic device or separately as discrete but interoperable logic devices or other hardware devices. In some cases, various features of electronic circuitry may be implemented as one or more integrated circuit devices, such as an integrated circuit chip or chipset.

If implemented in hardware, this disclosure may be directed to an apparatus with a processor or an integrated circuit device, such as an integrated circuit chip or chipset. Alternatively or additionally, if implemented in software or firmware, the techniques may be realized at least in part by a computer-readable data storage medium comprising instructions that, when executed, cause a processor to perform one or more of the methods described above. For example, the computer-readable data storage medium may store such instructions for execution by a processor.

A computer-readable medium may form part of a computer program product, which may include packaging materials. A computer-readable medium may comprise a computer data storage medium such as random access memory (RAM), read-only memory (ROM), non-volatile random access memory (NVRAM), electrically erasable programmable read-only memory (EEPROM), Flash memory, magnetic or optical data storage media, and the like. In some examples, an article of manufacture may comprise one or more computer-readable storage media.

In some examples, the computer-readable storage media may comprise non-transitory media. The term "non-transitory" may indicate that the storage medium is not embodied in a carrier wave or a propagated signal. In certain examples, a non-transitory storage medium may store data that can, over time, change (e.g., in RAM or cache). A computer-readable medium may also or alternatively be a transmission medium by which instructions may be conveyed. A computer-readable transmission medium may include carrier waves, transmission signals or the like. A computer-readable transmission medium may convey instructions between components of a single computer system and/or between plural separate computer systems.

The code or instructions may be software and/or firmware executed by processing circuitry including one or more processors, such as one or more digital signal processors (DSPs), general purpose microprocessors, application-specific integrated circuits (ASICs), field-programmable gate arrays (FPGAs), or other equivalent integrated or discrete logic circuitry. Accordingly, the term "processor," as used herein may refer to any of the foregoing structure or any other structure suitable for implementation of the techniques described herein. In addition, in some aspects, functionality described in this disclosure may be provided within software modules or hardware modules.

Thus, from one perspective there has been described proactive load balancing of network traffic processing for workloads. In general, techniques are described for a computing system comprising processing circuitry having access to a storage device. The processing circuitry is configured to apply, by a reinforcement learning agent, a policy model to a forecasted network traffic load associated with a workload to assign the workload to a first processing core of a plurality of processing cores of a computing device. The processing circuitry is also configured to process, by a virtual router and based on the assignment of the workload to the first processing core, network traffic for the workload using the first processing core.

Further examples of feature combinations taught by the present disclosure are set out in the following numbered clauses:
1. A method comprising:
   applying, by a reinforcement learning agent, a policy model to a forecasted network traffic load associated with a workload to assign the workload to a first processing core of a plurality of processing cores of a computing device; and
   processing, by a virtual router and based on the assignment of the workload to the first processing core, network traffic for the workload using the first processing core.
2. The method of clause 1, further comprising computing the forecasted network traffic load by:
   obtaining historical data associated with a plurality of workloads and the plurality of processing cores, wherein the plurality of workloads comprises the workload; and
   determining the forecasted network traffic load based on the historical data.
3. The method of clause 1 or 2, further comprising:
   collecting state data associated with the plurality of processing cores and the workload;
   calculating a reward signal for the assignment of the workload to the first processing core based on a reward function and the state data; and
   updating the policy model based on the reward signal.
4. The method of clause 3, wherein the state data comprises one or more of utilization of the plurality of processing cores, throughput of each processing core of the plurality of processing cores, a number of queues associated with each processing core of the plurality of processing cores, tail drops, jitter, or packet latency.
5. The method of clause 3 or 4, wherein the reward function is defined to one or more of minimize latency associated with an average time the first processing core processes the network traffic for the workload, minimize a number of idle processing cores of the plurality of processing cores, minimize a number of packet drops, or maximize overall throughput of the plurality of processing cores.
6. The method of any of clauses 3-5, wherein updating the policy model comprises applying a reinforcement learning algorithm comprising a policy gradient method.
7. The method of any of clauses 1-6, wherein the policy model is trained with one or more of historical assignment data, historical throughput data, usage of the plurality of processing cores, type of the plurality of processing cores, a requirement of the workload, type of the workload, or a profile associated with the workload.
8. The method of any of clauses 1-7, wherein the policy model comprises a neural network.
9. The method of any of clauses 1-8, further comprising:
   determining an assignment of a workload to a second processing core of the plurality of processing cores based on real-time metrics; and
   selecting the assignment of the workload to the first processing core rather than the assignment of the workload to the second processing core,
   wherein processing the network traffic for the workload using the first processing core is based on the selecting.
10. The method of any of clauses 1-9, wherein the reinforcement learning agent is executed by one of the computing device or a controller for a virtualized computing infrastructure that includes the computing device.
11. The method of any of clauses 1-10, further comprising:
   assigning, by the virtual router, a queue to the first processing core;
   enqueueing, based on the assigning of network traffic processing for the workload to the first processing core, the network traffic for the workload to the queue; and
   obtaining the network traffic for the workload based on the queue, prior to processing the network traffic for the workload.
12. A computing system comprising processing circuity having access to a storage device, the processing circuitry configured to:
   apply, by a reinforcement learning agent, a policy model to a forecasted network traffic load associated with a workload to assign the workload to a first processing core of a plurality of processing cores of a computing device; and
   process, by a virtual router, based on the assignment of the workload to the first processing core, network traffic for the workload using the first processing core.
13. The system of clause 12, wherein the processing circuitry is further configured to:
   obtain historical data associated with a plurality of workloads and the plurality of processing cores, wherein the plurality of workloads comprises the workload; and
   determine, by a machine learning forecasting method, the forecasted network traffic load based the historical data.
14. The system of clause 12 or 13, wherein the processing circuitry is further configured to:
   collect state data associated with the plurality of processing cores and the workload;
   calculate a reward signal for the assignment of the workload to the first processing core based on a reward function; and
   updating the policy model based on the reward signal.
15. The system of clause 14, wherein the reward function is defined to minimize latency associated with an average time the first processing core process the network traffic for the workload, minimize the number of idle processing cores of the plurality of processing cores, minimize the number of packet drops, and maximize overall throughput of the plurality of processing cores.
16. The system of clause 14 or 15, wherein to update the policy mode, the processing circuitry is configured to apply a reinforcement learning algorithm comprising a policy gradient method.
17. The system of any of clauses 12-16, wherein the processing circuitry is further configured to:
   determine an assignment of a workload to a second processing core of the plurality of processing cores based on real-time metrics; and
   select the assignment of the workload to the first processing core rather than the assignment of the workload to the second processing core,
   wherein processing the network traffic for the workload using the first processing core is based on the selecting.
18. Computer-readable storage media comprising instructions that, when executed, causes processing circuitry to:
   apply, by a reinforcement learning agent, a policy model to a forecasted network traffic load associated with a workload to assign the workload to a first processing core of a plurality of processing cores of a computing device; and
   process, by a virtual router and based on the assignment of the workload to the first processing core, network traffic for the workload using the first processing core.
19. The computer-readable storage media of clause 18, wherein the instructions further cause the processing circuitry to:
   obtain historical data associated with a plurality of workloads and the plurality of processing cores, wherein the plurality of workloads comprises the workload; and
   determine, by a machine learning forecasting method, the forecasted network traffic load based the historical data.
20. The computer-readable storage media of clause 18 or 19, wherein the instructions further cause the processing circuitry to:
   collect state data associated with the plurality of processing cores and the workload;
   calculate a reward signal for the assignment of the workload to the first processing core based on a reward function; and
   updating the policy model based on the reward signal.

## Claims

1. A computing system comprising processing circuity having access to a storage device, the processing circuitry configured to:
apply, by a reinforcement learning agent, a policy model to a forecasted network traffic load associated with a workload to assign the workload to a first processing core of a plurality of processing cores of a computing device; and
process, by a virtual router, based on the assignment of the workload to the first processing core, network traffic for the workload using the first processing core.

2. The system of claim 1, wherein the processing circuitry is further configured to:
obtain historical data associated with a plurality of workloads and the plurality of processing cores, wherein the plurality of workloads comprises the workload; and
determine, by a machine learning forecasting method, the forecasted network traffic load based the historical data.

3. The system of any of claims 1-2, wherein the processing circuitry is further configured to:
collect state data associated with the plurality of processing cores and the workload;
calculate a reward signal for the assignment of the workload to the first processing core based on a reward function; and
updating the policy model based on the reward signal.

4. The system of claim 3, wherein the state data comprises one or more of utilization of the plurality of processing cores, throughput of each processing core of the plurality of processing cores, a number of queues associated with each processing core of the plurality of processing cores, tail drops, jitter, or packet latency.

5. The system of claim 3, wherein the reward function is defined to one or more of minimize latency associated with an average time the first processing core processes the network traffic for the workload, minimize a number of idle processing cores of the plurality of processing cores, minimize a number of packet drops, or maximize overall throughput of the plurality of processing cores.

6. The system of claim 3, wherein to update the policy mode, the processing circuitry is configured to apply a reinforcement learning algorithm comprising a policy gradient method.

7. The system of any of claims 1-6, wherein the policy model is trained with one or more of historical assignment data, historical throughput data, usage of the plurality of processing cores, type of the plurality of processing cores, a requirement of the workload, type of the workload, or a profile associated with the workload.

8. The system of any of claims 1-7, wherein the policy model comprises a neural network.

9. The system of any of claims 1-8, wherein the processing circuitry is further configured to:
determine an assignment of a workload to a second processing core of the plurality of processing cores based on real-time metrics; and
select the assignment of the workload to the first processing core rather than the assignment of the workload to the second processing core,
wherein processing the network traffic for the workload using the first processing core is based on the selecting.

10. The system of any of claims 1-9, wherein the reinforcement learning agent is executed by one of the computing device or a controller for a virtualized computing infrastructure that includes the computing device.

11. The system of any of claims 1-10, wherein the processing circuitry is further configured to:
assign, by the virtual router, a queue to the first processing core;
enqueue, based on the assigning of network traffic processing for the workload to the first processing core, the network traffic for the workload to the queue; and
obtain the network traffic for the workload based on the queue, prior to processing the network traffic for the workload.

12. A method as performed by any of the systems of claims 1-11.

13. A computer-readable medium encoded with instructions for causing one or more programmable processors to become configured to become configured as the system of any of claims 1-11.
